# EUROPEAN PATENT APPLICATION

(11) **EP 2 638 961 A1**
(43) Date of publication of application: **18.09.2013**
(21) Application number: 12159429.5
(22) Date of filing: 14.03.2012
(51) Int. Cl.: B01J 19/24

(54) **Residence time plate**

(71) Applicant: Alfa Laval Corporate AB, 221 00 Lund (SE)
(72) Inventor: Höglund, Kasper, 144 63 Rönninge (SE); Lingvall, Magnus, 14139 Huddinge (SE)

(57) **Abstract**

The present invention relates to a residence time plate (1) comprising two or more chambers (2) connected in series, chambers (2) are separated by parallel walls (3), each wall (3) has a passage (4), which is a communication between two cambers (2), holes (4) are alternating on the right hand side or the left hand side of residence time plate (1), and residence time plate (1) has at least one inlet (5, 6) and at least one outlet (5, 6). The invention relates also to an assembled residence time section, a flow module and use of the flow module.

## Description

### Residence Time Plate

The present invention relates to a residence time plate, an assembled residence time section, a flow module, and use of the flow module as a reactor.

### Background

Many chemical reactions require long times and to fit such reactions in continuous plate reactors are costly. For continuous reactors long residence time results in "long channels" with careful regulation of the process flow. A "long channel" in a plate reactor is costly and requires several plates and lot of material for the production of the plates because the reactor plates have a high cost per volume ratio.

Usually chemical reactions need excellent heat transfer only in the beginning of the reaction. In the later part of the reaction it will be enough to have "some" heat transfer and to have plug flow.

### The Invention

Accordingly, the present invention offers a solution to the problems by providing a new plate concept for a continuous flow module. The new plate concept provides a plate having plug flow conditions and heat transfer capability. The new plate concept is less costly due to less material in the plate and thus is also a lighter plate, which is easier to handle when the flow module is put together or dismantling the flow module.

The plate is designed with a number of chambers connected in series. In each chamber is an insert fitted. The main purpose of the insert is for improving plug flow behaviour by mixing the flow. The insert may be folded sheet, baffle ladder sheet insert, stacked sheets insert, metallic foam or other, suitably is the insert made of metal.

Thus, the present invention relates to a residence time plate, which residence time plate comprises two or more chambers which are connected in series. The chambers are separated by parallel walls, and each wall has a passage, which passage is a communication between two cambers. The passages in the walls are alternating, either the passage is on the right hand side or the passage is on the left hand side of the residence time plate. The residence time plate has at least one inlet and at least one outlet.

The chambers of the residence time plate could be equipped with inserts, which inserts are selected from the group consisting of folded sheet inserts, baffle ladder sheet inserts, stacked sheets inserts, metallic foam, offset strip fin turbulators or combinations thereof. Preferably the inserts are folded sheet inserts.

The folded sheet inserts comprises baffles folded in an alternating fashion to form a zigzag pattern and the baffles have alternating heights. The baffle ladder sheet inserts comprises baffles folded out of the sheets plane in an alternating fashion up or down leaving holes in the sheet. The stacked sheets inserts comprises low baffles organized in pairs and folded out of the sheets plane up and down leaving holes in the sheet. At each end of the stacked sheet insert there is a hole to allow the flow to pass through the sheet and stack. The stacked sheet inserts are stacked such that layers are formed with the baffles acting as spacers.

The inserts may be coated with at least one catalyst. The coated insert could be of any type but preferably metallic foam is coated with at least one catalyst.

Each of passage in the chamber walls could be a hole, many small holes or a passage having a net for enhancing the mixing of the process flow, preferably the passages are holes.

The residence time plate could also comprise one or more access ports or one or more port holes, or combinations thereof, for providing access to the chambers and to the process flow when the residence time plate is in use.

The present invention relates also to an assembled residence time section. The assembled residence time section comprises at least one utility plate and a residence time plate, and the utility plate comprises a utility connection plate, a turbulator plate, a turbulator frame plate, an O-ring, a heat transfer plate and a utility frame plate. The residence time plate could be fitted in a utility frame plate, a heat transfer plate may be a barrier between residence time plate and the heat exchanger side of the utility plate.

The utility side may be closed by O-rings and barrier plates. In the utility conduit may a turbulator plate be located. The conduit may have two ports for inlet or outlet of heat transfer fluid. At both ends there may be a connection port. The connection ports may be designed to hold plugs, thermocouples or other equipment.

The assembled residence time section may comprise a residence time plate and two utility plates according to one alternative. The utility flow or the heat transfer fluid could be divided to flow through the two utility plates, one stream on each side of the residence time plate, and could be collected at the outlet. Process and utility sides could thus be totally separated, and there may be no interfaces with seals between the fluids, all seals could be towards atmosphere. The seals may be separated by a heat transfer plate which forms a part of the utility plate. The residence time plate could be closed with a utility plate on each side. Gaskets could be sealing the residence time plate in the utility frame plate of the at least one utility plate.

The process side, i.e. the residence time plate, may be closed by an expanded PTFE gasket, against the heat transfer plate. The process flow channel may be created in the residence time plate by an insert with baffles according to one alternative. The channel is connected to an inlet port and an outlet port. There could be several access ports to the channel and the access ports may be machined in the same plate.

The use of the residence time plates could be for the mixing and heat transfer between, liquid flows through the plate. The plate may be used together with a frame where the plates may be stacked together with other plates having other functions.

The present invention relates also to a flow module, preferably a plate reactor. The flow module may comprise one or more assembled residence time sections. The assembled residence time sections may comprise residence time plates, at least one utility plate, and a clamping device. The clamping device may comprise a frame, two end plates, disc springs, and tension rods. The piles of disc springs could be arranged as a grid of springs supported on the end plates to distribute the clamping forces on the residence time plates, which residence time plates could be placed between the two end plates. The frame could be designed to give sufficient clamping force, and pressure distribution, over the sealing surface to secure safe operation.

The assembled residence time sections may be stacked onto each other in a reactor frame and they may be assembled and clamped in the frame to seal and hold pressure. The assembled residence time sections may be stacked individually or in combination with other plates. The purpose defines the configuration to suit the intended process.

The process flow channel may be shaped to induce vortices which frequently reverse direction. This provides mixing of the flow, even though the flow may be in the laminar regime, which is an essential requirement for plug flow, good reaction rates and heat transfer. The utility flow conduit could be equipped with a turbulator plate that generates vortices in the flow which helps to transport heat to and from the wall to the fluid flow.

The flow module may also comprise one or more flow plates which flow plate is dividable in mid plane. The flow plates comprise two parts, each part comprises a channel side and a utility side, the two parts of the flow plate are counter parts and mirroring each other, connected together the two parts form a channel between the two counter parting channel sides. The channel comprises curved obstacles, sidewalls and channel floors. The curved obstacles may be lined up in parallel rows separated by sidewalls, and the backside of the rows of curved obstacles may have grooves making the obstacles hollow for heat transfer fluids on the utility sides.

The present invention relates also to a use of a flow module as a reactor for chemical reactions.

Other aspects and advantages of the invention will, with reference to the accompanying drawings, be presented in the following detailed description of embodiments of the invention. The below figures are intended to illustrate the invention and are only examples of the invention, and as such not to limit the scope of the invention.

### Brief description of the drawings

- Figure 1: is showing a residence time plate of the invention.
- Figure 2: is showing a residence time plate with folded sheet inserts.
- Figure 3: is showing a folded sheet insert of the invention.
- Figure 4: is showing a baffle ladder sheet insert of the invention.
- Figure 5: is showing stacked sheets insert of the invention.
- Figure 6: is showing the importance of the orientation of the baffles.
- Figure 7: is showing a blown apart part view of a residence time section.
- Figure 8: is showing a blown apart part view of a utility plate.
- Figure 9: is showing Plug Flow - Residence Time Distribution
- Figure 10: is showing a flow module.
- Figure 11: is showing one half of a flow plate which is dividable in midplane.
- Figure 12: is showing a flow plate which is dividable in midplane.

### Detailed description of the drawings

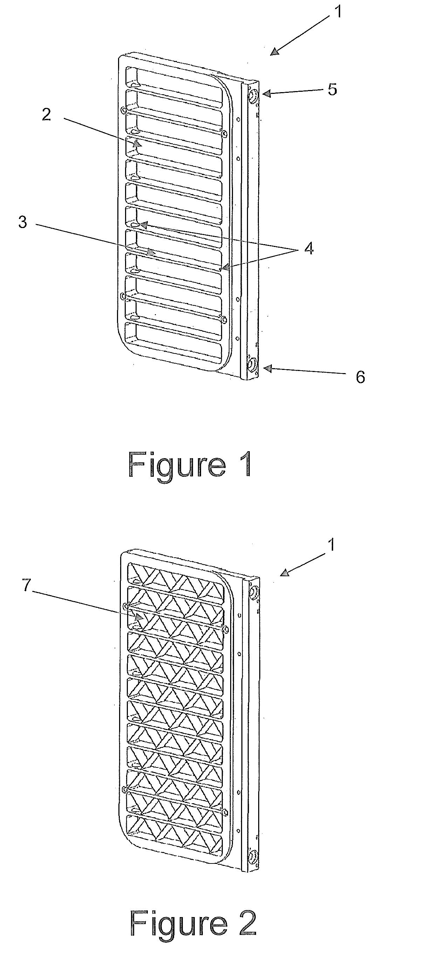

Figure 1 is showing a residence time plate 1 of the invention. The plate comprises two or more chambers 2, walls 3 are separating each chamber from the other. Holes or passages 4 are connecting each chamber 2 to the other that there are communications between the chambers. Holes 4 in walls 3 are alternately on the right hand side or on the left hand side of residence time plate 1 that chambers 2 are connected in series to one another within residence time plate 1. Chambers 2 could be equipped with inserts to promote mixing and plug flow. Suitable inserts could for instance be metallic foams, folded sheet inserts, baffle ladder sheet inserts, stacked sheets inserts, offset strip fin turbulators or combinations thereof. Residence time plate 1 has at least one inlet 5, 6 and at least one outlet 5, 6. One or more port holes or access ports could also be included in residence time plate 1 for access from the outside to the process side of residence time plate 1, this is not shown in Figure 1.

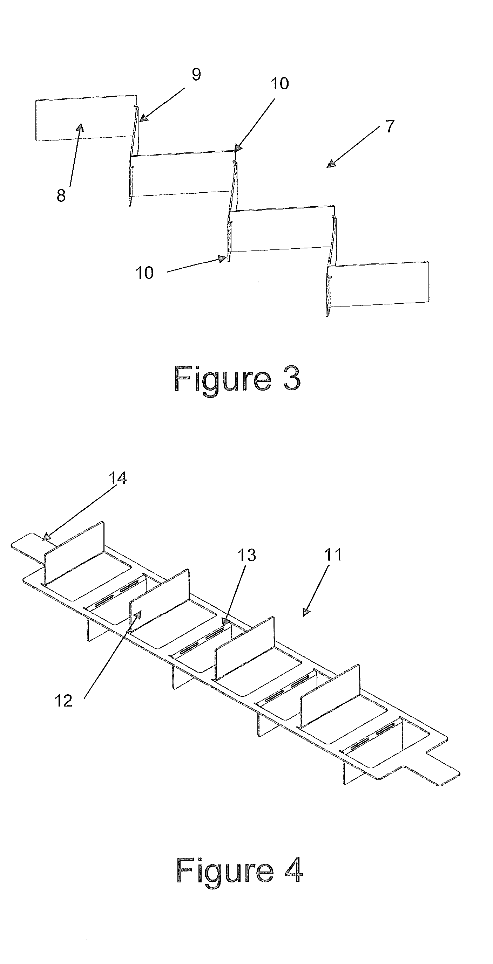

Figure 2 is showing a residence time plate 1 which has chambers 2 equipped with folded sheet inserts 7. Details of folded sheet inserts 7 are shown in Figure 3. Baffles 8 of folded sheet inserts 7 are alternating shifting place in folds 9 that they form a zigzag pattern if unfolded, and the alternations are defined as alternating heights 10. Alternating heights 10 promotes the mixing and plug flow of the process flow in each chamber 2.

Figure 4 is showing a baffle ladder sheet insert 11 of the invention according to an alternative embodiment. Baffle ladder sheet insert 11 has baffles 12 folded in an alternating fashion that baffles 12 are alternating up or down in folds 13. Securing parts 14 are securing insert 11 within chambers 2 and promotes the process flow into or out of chambers 2.

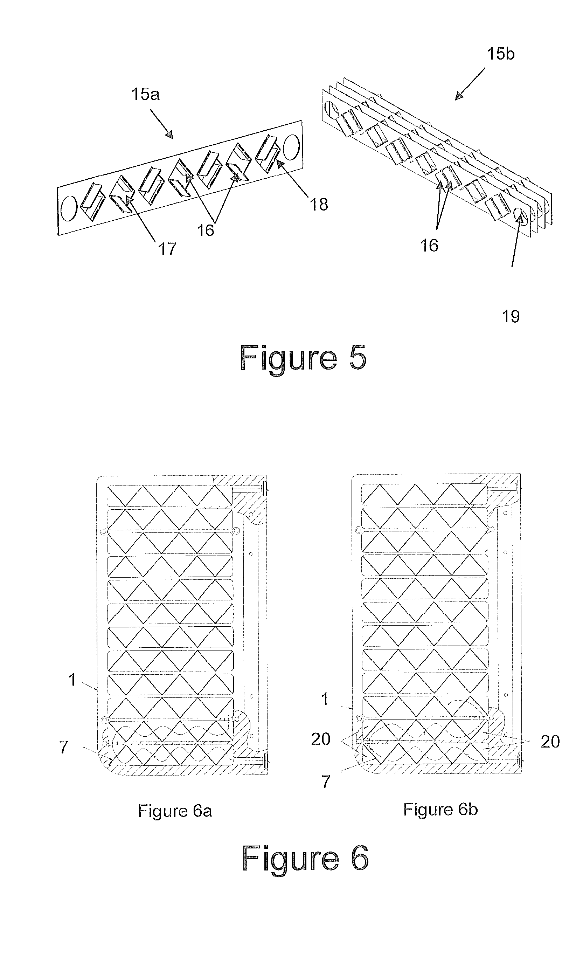

Figure 5 is showing one sheet insert 15a of stacked sheets insert 15b of the invention. Baffles 16 of sheet 15a is folded in two directions in each baffle holes 17. Folds 18 are directed in different directions dependent on the baffles and the holes. When stacked sheet insert 15b is stacked, baffles 16 have the same direction in the corresponding holes in the different sheets for fixing the sheets together and to form a layered structure in which the process fluids could be mixed. Passages 19 correspond to holes 2 of residence time plate 1, but stacked sheet insert 15b has two holes one on each side, holes 2 of residence time plate 1 are not seen in Figure 5.

Figure 6 is showing the importance of the orientation of the baffles of the folded sheet inserts. Correct orientation will create a process flow conduit as seen in

Figure 6a. Incorrect orientation creates "dead" volumes 20 in the flow conduit as seen in Figure 6b. Since folded sheet inserts 7 have a zigzag type of pattern, it is important that there is enough space for the incoming process fluids at the inlet 5 of residence time plate 1 and that the baffle 8 of the insert does not block the incoming fluid. Also at the alternating holes 2 in walls 3 of residence time plate 1 there is need for correct orientation of folded sheet inserts 7 for obtaining the desired flow.

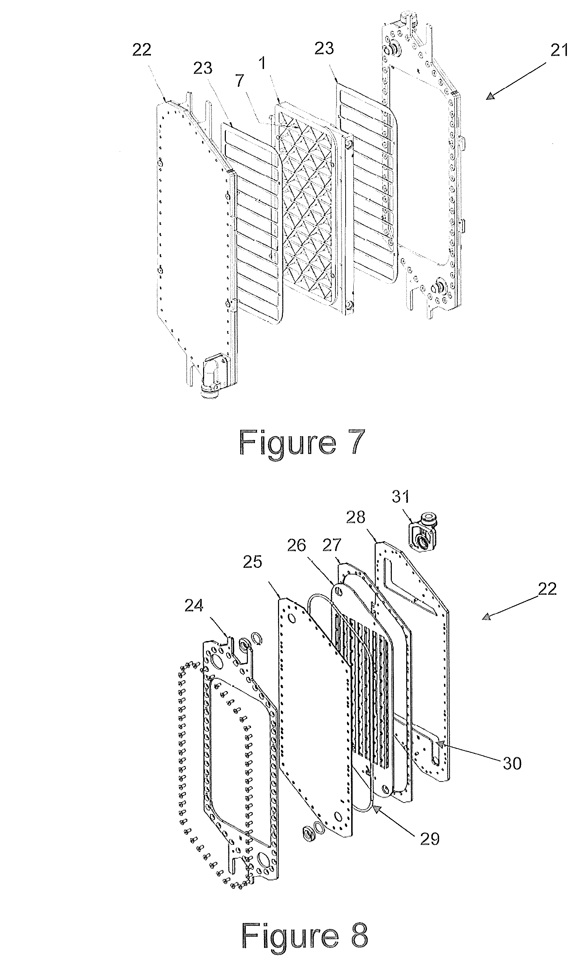

Figure 7 is showing a blown apart part view of a residence time section 21. Residence time section 21 comprises residence time plate 1 and two utility plates 22. Utility plates 22 are arranged on each side of residence time plate 1 and when in use the utility plates are cooling or heating the flow of the process fluids. Two gaskets 23 are sealing the flow conduit of residence time plate 1, one on each side when residence time section 21 is assembled. The assembled residence time sections may be stacked onto each other in a reactor frame or assembled residence time sections may be stacked onto other flow sections having other purposes. The assembled residence time sections may be assembled and clamped in the frame to seal and hold pressure, this is not seen in Figure 7.

Figure 8 is showing a blown apart part view of a utility plate 22. Utility frame plate 24 is the part which residence time plate 1 is fitted into, this is not shown in the Figure. A heat transfer plate 25 is a barrier between residence time plate 1 and the heat exchanger side of utility plate 22. On the heat exchanger side of utility plate 22 is a turbulator plate 26 for enhancing the heat transfer within the utility plate. Turbulator plate 26 is placed in a turbulator frame 27 on top of utility connection plate 28. The utility plate is sealed by an O-ring 29 on the heat exchanger side of the utility plate and O-ring 29 is placed around the circumference of turbulator plate 26. On utility connection plate 28 is two cut open parts 30 for distribution of utility fluids to utility plate and utility connection pieces 31 are inlets and outlets for utility fluids.

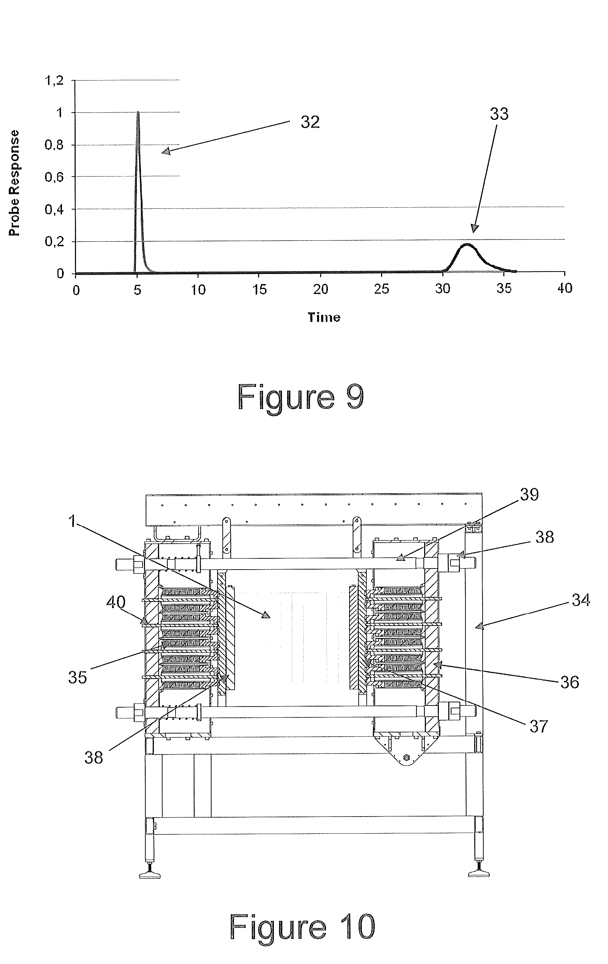

Figure 9 shows Plug Flow - Residence Time Distribution of the flow module having the new plate concept. By measuring the residence time distribution peaks, which will be an indication of the plug flow behaviour of the flow module.

The residence time measuring equipment is fitted to the inlet and outlet of the flow module. The 'pulse' method should result in sharp peak 32 for the injected medium and in a single smooth outlet curve 33 with a narrow distribution, which can be seen in the Figure 9. The size and shape of the curve is dependent upon the design of the flow path, the method of measurement, the concentration and the shape of the inlet curve. A narrow distribution of the outlet curve 33 indicates little axial dispersion of the injected fluid and hence good plug flow. Multiple peaks or peaks prior to or after the main curve may indicate bypassing. This might occur if a gasket is broken or when the reactor is configured with parallel flow paths.

Figure 10 is showing a flow module according to the invention. A clamping device which comprises residence time section 21, frame 34, grids of springs 35 and end plates 36 forming a flow module. Residence time plates 1 are assembled within frame 34. Frame 34 is holding residence time plates 1 into place between two distribution plates 37, together with two pressure plates 38 between two end plates 36. Residence time sections 21 could be put into place and compressed by aid of hydraulic cylinders tensioning the tension rods.

Residence time sections 21 are kept in place by the force from grids of springs 35 and end plates 36, nuts 38 could be tightened and the force from hydraulic cylinders could be released. The two end plates 36 are positioned so that the intended number of residence time sections 21 can be entered between them when in open position. The distance between end plates 36 may be adjusted by choosing the number of sleeves and tightening of nuts 38 on one end of each tension rod 39. Residence time sections 21 could be combined with other types of flow plates within the clamping device. Distribution plates 37 distribute the force contributions from the grids of springs 35 and end plates 36 to the pressure plates 38 and residence time sections 21. The force on residence time sections 21 can be measured by measuring the distance between one end plate 36 and how far indicator pins 40 have reached outside end plate 36. The flow module could be a plate reactor.

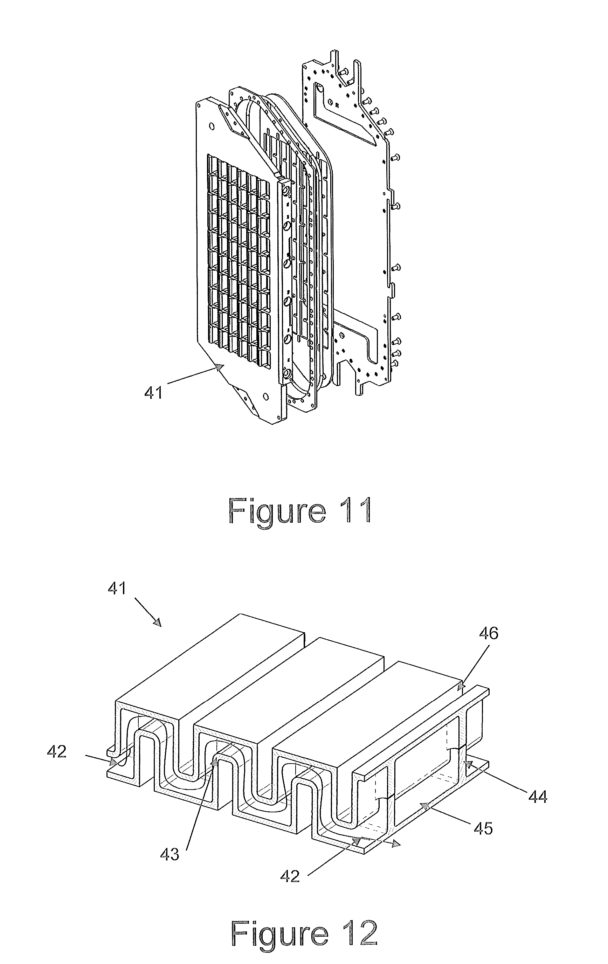

Figure 11 is showing a flow plate 41 which is dividable in midplane and comprises two parts, each part comprises a channel side and a utility side, the two parts of the flow plate are counter parts and mirroring each other, in this figure flow plate 41 is divided and one of the halves is seen from the channel side. Figure 12 shows the two parts of flow plate 41 and when the two parts are connected together the two parts form a channel 42 between the two counter parting channel sides. Channel 42 comprises curved obstacles 43, sidewalls 44 and channel floors 45, said curved obstacles are lined up in parallel rows separated by sidewalls 44, the backside of the rows of curved obstacles have grooves 46 making the obstacles hollow for heat transfer fluids on the utility sides.

The flow module of the present invention is useful when undertaking the following process operations; manufacturing, reactions, mixing, blending, doing cryogenic operations, washing, extractions and purifications, pH adjustment, solvent exchanges, manufacturing of chemicals, manufacturing of intermediate chemicals, manufacturing API (active pharmaceutical ingredients) when working with low temperature operations, manufacturing of pharmaceutical intermediates, scale-up and scale-down developments, precipitation or crystallisations, performing multiple injections or multiple additions or multiple measurements or multiple samplings, working with multistep reactions, precooling operations, preheating operations, post-heating and post-cooling operations, processes for converting batch processes to continuous processes, and operations for dividing and recombining flows.

Reaction types which can be preformed in the present invention include addition reactions, substitution reactions, elimination reactions, exchange reactions, quenching reactions, reductions, neutralisations, decompositions, replacement or displacement reactions, disproportionation reactions, catalytic reactions, cleaving reactions, oxidations, ring closures and ring openings, aromatization and dearomatization reactions, protection and deprotection reactions, phase transfer and phase transfer catalysis, photochemical reactions, reactions involving gas phases, liquid phases and solid phases, and which may involve free radicals, electrophiles, neucleophiles, ions, neutral molecules, etc.

Synthesis such as amino acid synthesis, asymmetric synthesis, chiral synthesis, liquid phase peptide synthesis, olefin metathesis, peptide synthesis, etc. can also be carried out with the flow module. Other types of synthesis in which the flow module can be used are reactions within carbohydrate chemistry, carbon disulfide chemistry, cyanide chemistry, diborane chemistry, epichlorohydrin chemistry, hydrazine chemistry, nitromethane chemistry, etc. or synthesis of heterocyclic compounds, of acetylenic compounds, of acid chlorides, of catalysts, of cytotoxic compounds, of steroid intermediates, of ionic liquids, of pyridine chemicals, of polymers, of monomers, of carbohydrates, of nitrones etc.

The flow module is suitable for name reactions such as Aldol condensations, Birch reductions, Baeyer-Villiger oxidations, Curtius rearrangements, Dieckmann condensations, Diels-Alder reactions, Doebner-Knoevenagel condensations, Friedel-Crafts reactions, Fries rearrangements, Gabriel synthesis, Gomberg-Bachmann reactions, Grignard reactions, Heck reactions, Hofmann rearrangements, Japp-Klingemann reactions, Leimgruber-Batcho indole synthesis, Mannich reactions, Michael additions, Michaelis-Arbuzov reactions, Mitsunobu reactions, Miyaura-Suzuki reactions, Reformatsky reactions, Ritter reactions, Rosenmund reductions, Sandmeyer reactions, Schiff base reductions, Schotten-Baumann reactions, Sharpless epoxidations, Skraup synthesis, Sonogashira couplings, Strecker amino acid synthesis, Swern oxidations, Ullmann reactions, Willgerodt rearrangements, Vilsmeier-Haack reactions, Williamson ether synthesis, Wittig reactions etc.

Further reactions which the flow module is suitable for are condensation reactions, coupling reactions, saponifications, ozonolysis, cyclization reactions, cyclopolymerization reactions, dehalogenations, dehydrocyclizations, dehydrogenations, dehydrohalogennations, diazotizations, dimethyl sulphate reactions, halide exchanges, hydrogen cyanide reactions, hydrogen fluoride reactions, hydrogenation reactions, iodination reactions, isocyanate reactions, ketene reactions, liquid ammonia reactions, methylation reactions, coupling, organometallic reactions, metalation, oxidation reactions, oxidative couplings, oxo reactions, polycondensations, polyesterifications, polymerization reactions, other reaction such as acetylations, arylations, acrylations, alkoxylations, ammonolysis, alkylations, allylic brominations, amidations, aminations, azidations, benzoylations, brominations, butylations, carbonylations, carboxylations, chlorinations, chloromethylations, chlorosulfonations, cyanations, cyanoethylations, cyano-methy-lations, cyanurations, epoxidations, esterifications, etherifications, halogenations, hydroformylations, hydrosilylations, hydroxylations, ketalizations, nitrations, nitro-methylations, nitrosations, peroxidations, phosgenations, quaternizations, silylations, sulfochlorinations, sulfonations, sulfoxidations, thiocarbonylations, thiophosgenations, tosylations, transaminations, transesterifications, etc.

The present invention is further defined by the independent claims and the dependent claims.

## Claims

1. A residence time plate (1) comprising two or more chambers (2) connected in series, chambers (2) are separated by parallel walls (3), each wall (3) has a passage (4), which is a communication between two cambers (2), passages (4) are alternating on the right hand side or the left hand side of residence time plate (1), and residence time plate (1) has at least one inlet (5, 6) and at least one outlet (5, 6).

2. A residence time plate according to claim 1, wherein chambers (2) are equipped with inserts, which inserts are selected from the group consisting of folded sheet inserts (7), baffle ladder sheet inserts (11), stacked sheets inserts (15), metallic foam, offset strip fin turbulators or combinations thereof.

3. A residence time plate according to claim 1 or 2, wherein the inserts are folded sheet inserts (7), comprising baffles (8) which are shifting place in folds (9) in an alternating fashion that they form a zigzag patter if unfolded, and the zigzag patter has alternating heights (10).
A residence time plate according to claim 1 or 2, wherein the inserts are folded sheet inserts (7), comprising baffles (8) with alternating heights (10) which are shifting place in folds (9) in an alternating fashion that they form a zigzag pattern.

4. A residence time plate according to any one of the preceding claims, wherein the inserts are baffle ladder sheet inserts (11), baffle ladder sheet insert (11) has baffles (12) folded out of the sheets plane in an alternating fashion that baffles (12) are alternating up or down in folds (13).

5. A residence time plate according to any one of the preceding claims, wherein the inserts are stacked sheets inserts (15), baffles (16) is folded out of the sheets plane in opposite directions forming baffle holes (17), folds (18) are directed in different directions dependent on the baffles and the holes, when stacked sheet inserts are stacked, baffles (16) acts as spacers having the same direction in the corresponding holes in the different sheets to form a layered structure.

6. A residence time plate according to any one of the preceding claims, wherein the inserts are metallic foams or offset strip fin turbulators.

7. A residence time plate according to any one of the preceding claims, wherein the inserts are coated with at least one catalyst, preferably the metallic foam is coated with at least one catalyst.

8. A residence time plate according to any one of the preceding claims, wherein each passage (4) is a hole, many small holes or a passage having a net for enhancing the mixing of the process flow, preferably passage (4) is a hole.

9. A residence time plate according to any one of the preceding claims, wherein one or more access ports or one or more port holes, or combinations thereof are providing access to chambers (2).

10. An assembled residence time section comprising at least one utility plate (22) and a residence time plate (1) according to any one of claims 1 to 9, wherein utility plate (22) comprises a utility connection plate (28), a turbulator plate (26), a turbulator frame plate (27), an O-ring (29), a heat transfer plate (25) and a utility frame plate (24).

11. An assembled residence time section according to claim 10, wherein residence time plate (1) is fitted in utility frame plate (24) and a heat transfer plate (25) is a barrier between residence time plate (1) and the heat exchanger side of utility plate (22).

12. An assembled residence time section according to claim 10 or 11, wherein gaskets (23) are sealing residence time plate (1) in utility frame plate (24) of at least one utility plate (22).

13. A flow module, preferably a plate reactor, comprising one or more assembled residence time sections according to any one of claims 10 to 12, comprising residence time plates (1) at least on utility plate (22), and a clamping device, which clamping device comprises a frame (34), two end plates (36), disc springs (35), and tension rods (39), wherein piles of disc springs (35) are arranged as a grid of springs supported on end plates (36) to distribute clamping forces on residence time plates (1), which residence time plates (1) are placed between the two end plates (25).

14. A flow module according to claim 13, wherein the flow module also comprises one or more flow plates (41) which flow plate is dividable in mid plane, and comprises two parts, each part comprises a channel side and a utility side, the two parts of the flow plate are counter parts and mirroring each other, connected together the two parts form a channel (42) between the two counter parting channel sides, the channel comprises curved obstacles (43), sidewalls (44) and channel floors (45), said curved obstacles are lined up in parallel rows separated by sidewalls, the backside of the rows of curved obstacles have grooves (46) making the obstacles hollow for heat transfer fluids on the utility sides.

15. Use of a flow module according to claim 13 or 14 as a reactor for chemical reactions.
